# EUROPEAN PATENT SPECIFICATION

(11) **EP 4 606 467 B1**
(45) Date of publication and mention of the grant of the patent: **23.09.2026**
(21) Application number: 24815834.7
(22) Date of filing: 28.05.2024
(51) Int. Cl.: B01F 35/71, B01F 35/22, H01M 4/04, H01M 10/00, B01F 101/59, B65G 53/66, B01F 35/21

(54) **ELECTRODE RAW MATERIAL TRANSFER SYSTEM**
ÜBERTRAGUNGSSYSTEM FÜR ELEKTRODENROHMATERIAL
SYSTÈME DE TRANSFERT DE MATIÈRES PREMIÈRES D'ÉLECTRODE

(30) Priority: 02.06.2023 KR 20230071697
(43) Date of publication of application: 27.08.2025
(73) Proprietor: LG Energy Solution, Ltd., Seoul 07335 (KR)
(72) Inventor: BANG, Woong Ju, Daejeon 34122 (KR); SON, Jae Huoung, Daejeon 34122 (KR); SHIN, Sung Jong, Daejeon 34122 (KR)
(74) Representative: Plasseraud IP
(86) International application number: PCT/KR2024/007207
(87) International publication number: WO 2024/248458

(56) References cited:
- CN-A- 115 676 158
- JP-A- 2003 128 247
- JP-A- 2007 319 840
- JP-A- H10 203 606
- KR-A- 20160 014 986
- KR-A- 20160 014 986
- KR-B1- 100 563 909
- US-A1- 2020 276 544

## Description

### Technical Field

The present invention relates to a transfer system for electrode raw materials, and relates, particularly, to a transfer system for powder-type electrode raw materials, which relates, specifically, to a transfer system for electrode raw materials capable of preventing clogging of an inlet portion in a stirring part due to the electrode raw materials by applying pneumatic pressure and vibration to the inlet portion.

This application claims the benefit of priority based on Korean Patent Application No. 10-2023-0071697 dated June 2, 2023.

### Background Art

A secondary battery is a battery capable of recharging, which is configured to repeat charging and discharging by moving ions in an electrolyte between a positive electrode and a negative electrode insulated by a separator. The secondary battery may comprise an electrode assembly, and a case embedding the electrode assembly, where the electrode assembly is formed by alternately laminating positive electrodes, negative electrodes, and separators.

A process for manufacturing a secondary battery comprises an electrode process, an assembly process, and an activation process. Here, the electrode process is a process for manufacturing a positive electrode and a negative electrode. The positive electrode or negative electrode is manufactured through the following processes sequentially.

The electrode process comprises a mixing process, a coating process, a rolling process, a slitting process, and a notching process.

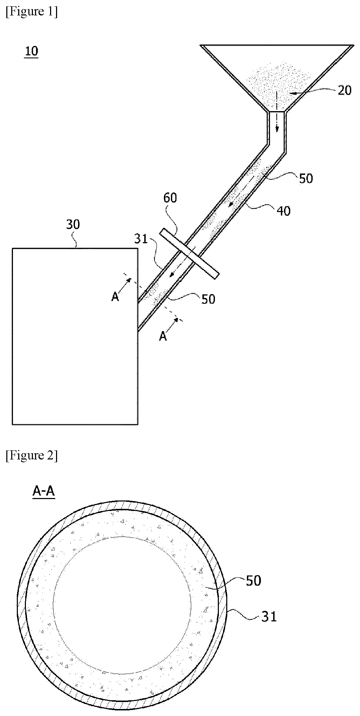

Figure 1 schematically shows a conventional mixing device, and Figure 2 is a schematic cross-sectional diagram cut along Line A-A in Figure 1.

The mixing process is a process of measuring and mixing various electrode raw materials, where in the mixing process, various electrode raw materials are mixed to form a liquid slurry.

The slurry is a mixture of an active material, a conductive material, a binder, and a solvent. The active material and the conductive material are dry-mixed in the form of powder. Thereafter, the active material and the conductive material are wet-mixed in the solvent in which the binder is dissolved, thereby forming the slurry.

The mixing device (10) comprises a raw material supply hopper (20) into which the powder-type electrode raw material (50) is introduced, and a stirring part (30) where the electrode raw material (50) supplied from the hopper (20) is stirred.

As the powder-type electrode raw material (50), various active materials may be used depending on the type of secondary battery product. In particular, the used amounts of positive electrode active material and negative electrode active material are very large, whereby the materials are mainly supplied to the mixing device (10) in the form of powder.

The respective electrode raw materials (50) introduced into the stirring part (30) have different transfer times introduced into the stirring part (30), different mixing times for which the raw materials are mixed in the mixing device (10), and the like, depending on the characteristics of each raw material.

Furthermore, in the process of being transferred from the raw material supply hopper (20) to the stirring part (30), there is a phenomenon that the inlet portion (31) of the stirring part (30) and/or a piping part (40) connecting the raw material hopper (20) and the inlet portion (31) of the stirring part (30) becomes clogged due to an agglomeration phenomenon between the electrode raw materials (50) depending on the characteristics of the electrode raw materials (50). Meanwhile, the inlet portion (31) of the stirring part (30) and the piping part (40) may be connected through a clamp (60).

Here, the agglomeration phenomenon between the electrode raw materials (50) in the form of powder may be caused due to the characteristics of the electrode raw materials (50), and as one example, the powder agglomeration phenomenon may be caused by a chemical reaction between the internal moisture component of the mixing device (10) and the electrode raw materials (50) in the form of powder.

If the inlet portion (31) of the stirring part (30) and/or the piping part (40) becomes clogged, the transfer time for the electrode raw material (50) to be transferred to the stirring part (30) takes a long time. In addition, if the inlet portion (31) of the stirring part (30) becomes clogged and thus the input area of the inlet portion (31) is narrowed, it is difficult to accurately calculate the input area through which the electrode raw material (50) passes through the inlet portion (31) per unit time.

Accordingly, there may be a problem in which the electrode raw material (50) is not introduced quantitatively, and when the inlet portion (31) of the stirring part (30) is clogged, there is a problem that a defective slurry is produced due to a metering error in the electrode raw material (50).

Conventionally, when the piping part (40) and/or the inlet portion (31) of the stirring part (30) was clogged upon the mixing process, a worker performed a work of separating the clamp (60) and the piping part (40), and pulverizing the electrode raw material (50) (e.g., positive electrode active material, negative electrode active material, etc.) lumped into lumps at the piping part (40) and/or the inlet portion (31) of the stirring part (30) manually. Accordingly, there was a problem that the mixing process was not performed during the working time, thereby resulting in a decrease in slurry productivity.

US 2020/276544 A1 discloses a transfer system according to the preamble of claim 1.

### Disclosure

### Technical Problem

The present invention is intended to provide a transfer system for electrode raw materials capable of preventing clogging of an inlet portion in a stirring part due to the electrode raw materials during a mixing process by applying pneumatic pressure and vibration to the inlet portion.

In addition, the present invention is intended to provide a transfer system for electrode raw materials capable of shortening a transfer time of the electrode raw materials by preventing clogging of an inlet portion of a stirring part.

### Technical Solution

To solve the above-described problems, the invention provides an electrode raw material transfer system according to claim 1. The transfer system comprises a stirring part having an inlet portion into which electrode raw materials are introduced, and provided to perform a mixing process for the electrode raw materials, a sensor part provided to measure a pressure within the stirring part, an air injection part provided at the inlet portion of the stirring part and provided to spray air into the inlet portion, a vibration part provided to apply vibration to the inlet portion, and a control part provided to adjust an air injection pressure of the air injection part, based on the pressure within the stirring part. As one example, the electrode raw material may be a powder-type electrode raw material.

The air injection part may comprise a plurality of air nozzles disposed within the inlet portion to spray air along the input direction of the electrode raw material, a pneumatic pressure supply part providing pneumatic pressure to each air nozzle, and a regulator for controlling the pneumatic pressure supplied to each air nozzle. As one example, the pneumatic pressure supply part may comprise an air pump, and the regulator may adjust the pressure (pneumatic pressure) of the air sprayed from the air nozzle by adjusting a flow rate of air.

Also, the plurality of air nozzles may be arranged apart from each other along the circumferential direction of the inlet portion of the stirring part.

In additionally, the vibration part may comprise an air turbine vibrator.

Furthermore, the control part may be provided to operate the air injection part and the vibration part upon an input mode in which the electrode raw material is introduced into the stirring part.

Also, the control part may operate the air injection part so that the air is sprayed at a first operating pressure lower than the internal pressure of the stirring part upon the input mode.

In addition, upon the input mode, the first operating pressure may be 0.1MPa to 0.6MPa.

Furthermore, the control part may control operation of the vibration part so that the vibration is applied at an intensity of 1kgf to 60kgf upon the input mode.

Also, the electrode raw material transfer system may comprise a raw material supply part having an outlet portion for supplying the electrode raw material to the stirring part, and a piping part connecting the outlet portion and the inlet portion and guiding transfer of the electrode raw material from the raw material supply part to the stirring part.

In addition, the piping part may comprise a first pipe connected to the stirring part, a second pipe connected to the raw material supply part, and a vibration reduction tube provided in the second pipe.

Furthermore, the first pipe and the second pipe may be connected through a clamp. The first pipe may form the inlet portion of the stirring part, and the second pipe may form the outlet portion of the raw material supply part.

Also, the air injection part and the vibration part may each be provided in the first pipe. As one example, the air injection part may be provided to spray air inside the first pipe, and the vibration part may be provided to apply vibration to the first pipe.

In addition, the electrode raw material transfer system may comprise an air knocker mounted on the second pipe and provided to hit the second pipe upon an input mode of the electrode raw material.

Furthermore, the control part may be provided to operate the air injection part and the vibration part continuously and to operate the air knocker at predetermined time intervals, upon the input mode.

Also, the vibration reduction tube may be formed of a silicone material. In addition, the vibration reduction tube may be provided to surround a partial region of the second pipe.

In addition, the electrode raw material transfer system may comprise a vent pipe connected to the stirring part. The control part may be provided to open the vent pipe to the outside upon the input mode. Upon the input mode, as the pneumatic pressure sprayed from the air injection part is applied to the inside of the stirring part, the pressure inside the stirring part may increase. In this instance, by opening the vent pipe to the outside, it is possible to maintain the pressure within the stirring part constant. An electronic valve may be provided in the vent pipe.

Furthermore, the control part may operate the air injection part so that the air is sprayed at a second operating pressure greater than the first operating pressure when the pressure within the stirring part decreases upon the input mode.

### Advantageous Effects

As discussed above, the electrode raw material transfer system related to one example of the present invention has the following effects.

By applying pneumatic pressure and vibration to the inlet portion of the stirring part, it is possible to prevent clogging of the inlet portion due to electrode raw materials during the mixing process. Particularly, upon an input mode of the electrode raw materials, by spraying the air into the inlet portion of the stirring part, it is possible to prevent the agglomeration phenomenon between the electrode raw materials in the form of powder.

Also, the air sprayed from the air nozzle is sprayed in the input direction of the electrode raw material, whereby the powder-type electrode raw material can be pushed in the input direction and simultaneously introduced into the stirring part in the form of powder.

In addition, by applying vibration to the inlet portion of the stirring part upon an input mode of the electrode raw material, it is possible to prevent the electrode raw material from adhering to the inner surface of the inlet portion.

Furthermore, by preventing clogging of the inlet portion of the stirring part due to electrode raw materials, it is possible to shorten the transfer time of electrode raw materials, and it is possible to improve productivity of the slurry.

In addition, it is possible to minimize an input area error due to clogging of the electrode raw material, and it is possible to minimize a measurement error of the electrode raw material.

### Description of Drawings

Figure 1 schematically shows a conventional mixing device.
Figure 2 is a schematic cross-sectional diagram cut along Line A-A in Figure 1.
Figure 3 is a configuration diagram of a transfer system for electrode raw materials according to one example of the present invention.
Figure 4 is a schematic diagram of a transfer system for electrode raw materials according to one example of the present invention.
Figure 5 is a schematic cross-sectional diagram cut along Line B-B in Figure 4.
Figure 6 is a diagram for explaining one operating state of a transfer system for electrode raw materials according to one example of the present invention.
Figure 7 is an enlarged diagram of the inlet portion shown in Figure 6.

### Mode for Invention

Hereinafter, a transfer system for electrode raw materials according to one example of the present invention will be described with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

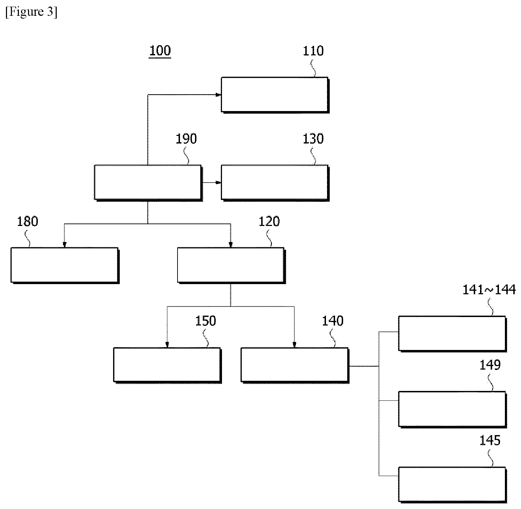

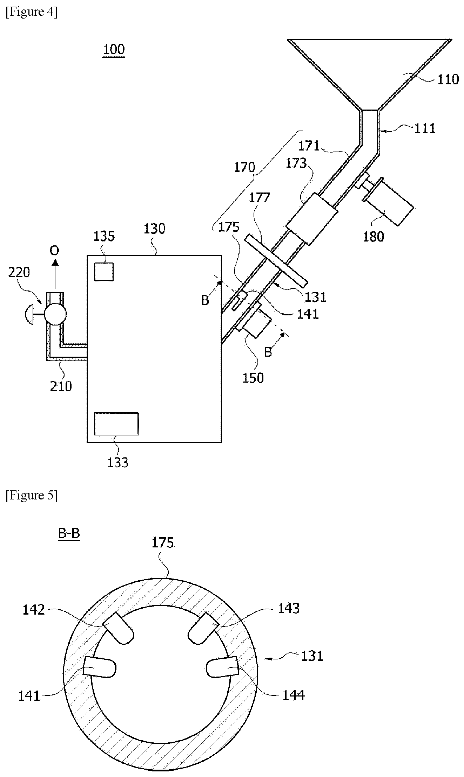

Figure 3 is a configuration diagram of a transfer system (100) for electrode raw materials according to one example of the present invention, Figure 4 is a schematic diagram of a transfer system (100) for electrode raw materials according to one example of the present invention, and Figure 5 is a schematic cross-sectional diagram cut along Line B-B in Figure 4.

As one example, in this document, the electrode raw material may be a powder-type electrode raw material.

The electrode raw material transfer system (100) of the present invention comprises a stirring part (130) having an inlet portion (131) into which the powder-type electrode raw material (50) is introduced, and provided to perform a mixing process for the electrode raw material (50).

In addition, the electrode raw material transfer system (100) comprises an occlusion prevention part (120) provided at the inlet portion (131) and provided to provide pneumatic pressure and vibration to the inlet portion (131).

The occlusion prevention part (120) comprises an air injection part (140) and a vibration part (150).

The electrode raw material transfer system (100) comprises a sensor part (135) provided to measure the pressure within the stirring part (130).

The stirring part (130) comprises a stirring unit (133) including a rotating shaft connected to a drive part such as a motor and a plurality of blades mounted on the rotating shaft. The stirring part (130) is provided so that the stirring unit (133) is operated upon an input mode in which electrode raw materials are introduced. When the stirring unit (133) operates, it mixes the electrode raw materials (50) in the stirring part (130) while the rotating shaft is rotated by the drive part and the plurality of blades mounted on the rotating shaft rotates.

Also, the transfer system (100) for the electrode raw materials comprises an air injection part (140) provided at the inlet portion (131) of the stirring part (130) and provided to spray air into the inlet portion (131).

In addition, the electrode raw material transfer system (100) comprises a vibration part (150) provided to apply vibration to the inlet portion (131).

Furthermore, the electrode raw material transfer system (100) comprises a control part (190) provided to adjust the air injection pressure of the air injection part based on the pressure within the stirring part (130).

The sensor part (135) may comprise one or more pressure sensors, which is provided to measure the pressure within the stirring part (130). In addition, the measured pressure within the stirring part (130) is transmitted to the control part (190), and the control part (190) is provided to adjust an injection pressure of the air sprayed through the air injection part (140) based on the measured pressure within the stirring part (130).

The air injection part (140) is provided to enable fluid movement with the inside of the inlet portion (131). The air injection part (140) is provided to spray air at a predetermined pneumatic pressure from the inside of the inlet portion (131). In this document, the pressure (pneumatic pressure) of air sprayed through the air injection part (140) may be referred to as operating pressure or injection pressure.

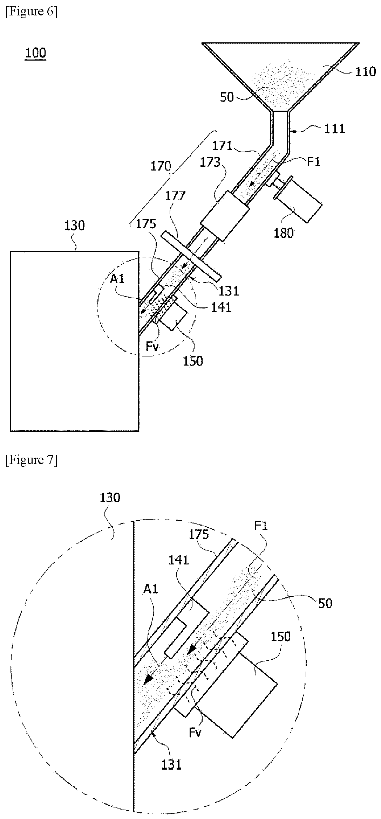

Figure 6 is a diagram for explaining one operating state of a transfer system (100) for electrode raw materials according to one example of the present invention, and Figure 7 is an enlarged diagram of the inlet portion (131) shown in Figure 6.

The air injection part (140) may comprise a plurality of air nozzles (141 to 144) disposed within the inlet portion (131) to spray air along the input direction (F1) of the electrode raw material (50).

In addition, the air injection part (140) may comprise a pneumatic pressure supply part (149) connected to each air nozzle (141 to 144) and providing pneumatic pressure to each air nozzle (141 to 144), and a regulator (145) for adjusting the pneumatic pressure supplied to each air nozzle (141 to 144). As one example, the pneumatic pressure supply part (149) may comprise an air pump, and the regulator (145) may adjust the pressure (pneumatic pressure) of the air sprayed from the air nozzles (141 to 144) by adjusting the flow rate of air.

Each air nozzle (141 to 144) may be provided in the inlet portion (131) to be spaced apart from the vibration part (150). Also, the plurality of air nozzles (141 to 144) may be arranged apart from each other along the circumferential direction of the inlet portion (131) of the stirring part (130).

Referring to Figures 6 and 7, the plurality of air nozzles (141 to 144) may be provided in the inlet portion (131) such that the air injection direction (A1) is parallel to the electrode raw material input direction (F1).

The pneumatic pressure supply part (149) is connected to each air nozzle (141 to 144), and the pneumatic pressure supply part (149) provides pneumatic pressure to each air nozzle (141 to 144) upon the input mode of the electrode raw material (50).

Also, the electrode raw material transfer system (100) may comprise a raw material supply part (110) having an outlet portion (111) for supplying the electrode raw material (50) to the stirring part (130), and the raw material supply part (110) may comprise a hopper. In addition, the raw material supply part (110) may also store a powder-type electrode raw material (50), and the electrode raw material (50) may be a positive electrode active material, a negative electrode active material, or a conductive material.

In addition, the transfer system (100) for electrode raw materials may comprise a piping part (170) connecting the outlet portion (111) and the inlet portion (131), and guiding transfer of the electrode raw material (50) from the raw material supply part (110) to the stirring part (130).

Furthermore, the piping part (170) may comprise a first pipe (175) connected to the stirring part (130), a second pipe (171) connected to the raw material supply part (110), and a vibration reduction tube (173) provided in the second pipe (171). In addition, the first pipe (175) and the second pipe (171) may be connected through a clamp (177).

An outlet portion (111) may be provided at the bottom of the raw material supply part (110), and the outlet portion (111) is a passage through which the electrode raw material (50) is discharged from the raw material supply part (110). In addition, an inlet portion (131) into which the electrode raw material (50) is introduced may be provided at the top of the stirring part (130). At this time, the first pipe (175) may form the inlet portion (131) of the stirring part (130), and the second pipe (171) may form the outlet portion (111) of the raw material supply part (110).

In such a structure, the electrode raw material (50) in the raw material supply part (110) may be introduced into the stirring part (130) by sequentially passing through the second pipe (171) and the first pipe (175).

Also, the air injection part (140) and the vibration part (150) may each be provided in the first pipe (175). As one example, the air injection part (140) may be provided to spray air from the inside of the first pipe (175), and the vibration part (150) may be provided to apply vibration to the first pipe (175).

In addition, the control part (190) may be provided to operate the air injection part (140) and the vibration part (150) upon an input mode in which the electrode raw material (50) is introduced into the stirring part (130).

Furthermore, the control part (190) may operate the air injection part (140) to spray air at a first operating pressure lower than the internal pressure of the stirring part (130) upon the input mode. As one example, upon the input mode, the first operating pressure may be 0.1MPa to 0.6MPa. In addition, the first operating pressure may be 0.3MPa to 0.4MPa.

Upon the input mode of the electrode raw material (50), the air injection part (140) sprays air to the electrode raw material (50) flowing through the inlet portion (131), so that the electrode raw material (50) is dispersed in the form of powder, and performs the function of pushing the electrode raw material (50) in the electrode raw material input direction (F1).

Also, the electrode raw material transfer system (100) may comprise a vent pipe (210) connected to the stirring part (130). The control part (190) may be provided to open the vent pipe (210) to the outside (O) upon an input mode of the electrode raw material (50). Upon the input mode of the electrode raw material (50), as the pneumatic pressure sprayed from the air injection part (140) is applied to the inside of the stirring part (130), the pressure within the stirring part (130) may increase. In this instance, by opening the vent pipe (210) to the outside (O), it is possible to maintain the pressure within the stirring part (130) constant. An electronic valve (220) may be provided in the vent pipe (210). The electronic valve (220) is provided to open or close the vent pipe (210).

Meanwhile, a filter may be provided in the vent pipe (210). Therefore, the fluid discharged from the stirring part (130) along the vent pipe (210) may pass through the filter and then be discharged to the outside of the transfer system (100).

Referring to Figure 4, the vibration part (150) may be provided outside the inlet portion (131). The vibration part (150) may be provided to apply vibration to the first pipe (175), and the vibration part (150) may be provided to apply vibration from the outside of the first pipe (175).

Also, the vibration part (150) may be arranged to be spaced apart from each air nozzle (141 to 144).

In addition, the vibration part (150) is provided to provide vibration (Fv) in a predetermined magnitude to the inlet portion (131). The intensity of vibration (Fv) generated in the vibration part (150) may be in a range of 1kgf to 60kgf. Furthermore, the intensity of vibration (Fv) generated in the vibration part (150) may be in the range of 20kgf to 25kgf. That is, the control part (190) may control the operation of the vibration part (150) so that vibration is applied at an intensity of 1kgf to 60kgf upon the input mode of the electrode raw material (50).

Furthermore, the vibration part (150) may comprise an air turbine vibrator. The air turbine vibrator is a device applying vibration to the inlet portion (131) using compressed air as a power source. As one example, the air turbine vibrator is known equipment, which may be a vibration device generating vibration force by rotating an internal rotary turbine gear.

The vibration part (150) provides vibration (Fv) to the inlet portion (131) upon the input mode of the electrode raw material (50). When the vibration part (150) operates, vibration occurs outside the first pipe (175). In this way, by applying vibration (Fv) to the inlet portion (131) upon the input mode of the electrode raw material (50), it is possible to prevent the electrode raw material (50) from being attached to the inner surface of the inlet portion (131) (or the inner surface of the first pipe).

As described above, the piping part (170) connects the outlet portion (111) of the raw material supply part (110) and the inlet portion (131) of the stirring part (130), and the piping part (170) performs the function of guiding the electrode raw material (50) from the raw material supply part (110) to the stirring part (130).

The second pipe (171) may constitute the outlet portion (111) of the raw material supply part (110), and the second pipe (171) may be made of a metal material having rigidity.

In addition, the first pipe (175) may be detachably coupled to the second pipe (171) by a clamp (177), and the first pipe (175) may be made of a metal material having rigidity.

The transfer system (100) for the electrode raw materials may be mounted on the second pipe (171), and may comprise an air knocker (180) provided to hit the second pipe (171) upon the input mode of the electrode raw material (50).

The air knocker (180) may be provided in the second pipe (171), and the air knocker (180) performs the function of preventing the electrode raw material (50) in the form of powder from being attached to the inner surface of the second pipe (171) by hitting the second pipe (171) upon the input mode of the electrode raw material (50).

The air knocker (180) is a known device, which may be, as one example, a vibrational impacting device dropping the electrode raw material (50) attached to the inner surface of the second pipe (171) in an indirect impact manner by counteraction between compressed air and magnetic force of a magnetic piston.

When the air knocker (180) operates, vibration occurs in the second pipe (171) by the force that the air knocker (180) strikes the second pipe (171). At this time, if the vibration generated from the air knocker (180) is transmitted to the stirring part (130), malfunction of the stirring part (130) may be caused.

To prevent this, the vibration reduction tube (173) may be provided to surround a partial region of the second pipe (171). In addition, the vibration reduction tube (173) may be formed of a silicone material. The vibration reduction tube (173) may prevent vibration from being transmitted from the second pipe (171) to the first pipe (175).

The control part (190) controls the operation of the raw material supply part (110), the stirring part (130), the air injection part (140), the vibration part (150), and the air knocker (180).

Upon the input mode of the electrode raw material (50), the control part (190) controls operation of the raw material supply part (110) so that the electrode raw material (50) is introduced into the inlet portion (131) through the outlet portion (111) of the raw material supply part (110). In addition, the control part (190) operates the stirring part (130) and opens the vent pipe (210) to the outside, upon the input mode of the electrode raw material (50).

Upon the input mode, the electrode raw material (50) discharged from the raw material supply part (110) passes through the inlet portion (131) while being transferred along the piping part (170), thereby being introduced into the stirring part (130).

Depending on the characteristics of the electrode raw material (50), a clogging phenomenon of the inlet portion (131) may occur, and to solve this, the control part (190) controls operation of the air injection part (140) and the vibration part (150) so that upon the input mode where the electrode raw material (50) is introduced into the stirring part (130), pneumatic pressure and vibration (Fv) are provided to the inlet portion (131, first pipe).

The control part (190) may be provided so that upon the input mode of the electrode raw material (50), the air injection part (140) and the vibration part (150) are operated continuously, and the air knocker (180) is operated at predetermined time intervals. As one example, upon the input mode of the electrode raw material (50), air may be continuously sprayed to the inside of the first pipe (175) by the air injection part (140), and vibration may be applied continuously to the first pipe (175) by the vibration part (150).

Also, the control part (190) may control the operation of the vibration part (150) so that vibration (Fv) with an intensity of 1kgf to 60kgf is provided to the inlet portion (131) upon the input mode of the electrode raw material (50).

Particularly, the control part (190) may control the operation of the air injection part (140) so that air is supplied at a first operating pressure lower than the internal pressure of the stirring part (130) upon the input mode of the electrode raw material (50).

In addition, when the pressure within the stirring part (130) decreases while air is supplied at a first operating pressure lower than the internal pressure of the stirring part (130) upon the input mode, the control part (190) may operate the air injection part (140) so that air is sprayed at a second operating pressure larger than the first operating pressure.

Specifically, in the process of maintaining the pressure of the stirring part (130) constant (the pressure at this time is called 'set pressure') upon the input mode of the electrode raw material (50), it may operate the air injection part (140) so that air is supplied at the first operating pressure, and when the pressure of the stirring part (130) becomes lower than the set pressure, it may operate the air injection part (140) so that air is sprayed at the second operating pressure greater than the first operating pressure.

When the electrode raw material (50) is attached inside the first pipe (175), the pneumatic pressure supplied through the air injection part (140) may not be properly transmitted to the stirring part (130), and in this case, the pressure within the stirring part (130) may be lowered. In this instance, the control part (190) operates the air injection part (140) so that air is sprayed at the second operating pressure greater than the first operating pressure, whereby it is possible to resolve the clogging phenomenon. In addition, when the pressure of the stirring part (130) becomes lower than the set pressure, the control part (190) may also increase the vibration intensity of the vibration part (150).

Meanwhile, if the pressure within the stirring part (130) exceeds the set pressure, the control part (190) may stop the input mode, and stop the operation of the air injection part (140) and the vibration part (150).

### Industrial Applicability

According to the transfer system for electrode raw materials related to one example of the present invention, pneumatic pressure and vibration are applied to the inlet portion of the stirring part, whereby it is possible to prevent clogging of the inlet portion due to electrode raw materials during the mixing process.

## Claims

1. An electrode raw material transfer system (100) comprising:
a stirring part (130) having an inlet portion (131) into which electrode raw materials (50) are introduced, and provided to perform a mixing process for the electrode raw materials (50);
a sensor part (135) provided to measure a pressure within the stirring part (130); **characterized by**
an air injection part (140) provided at the inlet portion (131) of the stirring part (130) and provided to spray air into the inlet portion (131);
a vibration part (150) provided to apply vibration to the inlet portion (131); and
a control part (190) provided to adjust an air injection pressure of the air injection part (140), based on the pressure within the stirring part (130).

2. The electrode raw material transfer system (100) according to claim 1, wherein
the air injection part (140) comprises: a plurality of air nozzles (141 to 144) disposed within the inlet portion (131) to spray air along the input direction (F1) of the electrode raw material (50);
a pneumatic supply part (149) providing pneumatic pressure to each air nozzle(141 to 144); and
a regulator (145) for controlling the pneumatic pressure supplied to each air nozzle(141 to 144).

3. The electrode raw material transfer system (100) according to claim 2, wherein
the plurality of air nozzles(141 to 144) is arranged apart from each other along the circumferential direction of the inlet portion (131).

4. The electrode raw material transfer system according (100) to claim 1, wherein
the vibration part (150) comprises an air turbine vibrator.

5. The electrode raw material transfer system according (100) to claim 1, wherein
the control part (190) is provided to operate the air injection part (140) and the vibration part (150) upon an input mode in which the electrode raw material (50) is introduced into the stirring part (130).

6. The electrode raw material transfer system according (100) to claim 5, wherein
the control part (190) operates the air injection part (140) so that the air is sprayed at a first operating pressure lower than the internal pressure of the stirring part (130) upon the input mode.

7. The electrode raw material transfer system (100) according to claim 6, wherein
upon the input mode, the first operating pressure is 0.1MPa to 0.6MPa.

8. The electrode raw material transfer system (100) according to claim 5, wherein
the control part (190) controls operation of the vibration part (150) so that the vibration is applied at an intensity of 1kgf to 60kgf upon the input mode.

9. The electrode raw material transfer system (100) according to claim 1, further comprising:
a raw material supply part (110) having an outlet portion (111) for supplying the electrode raw material (50) to the stirring part (130); and
a piping part (170) connecting the outlet portion (111) and the inlet portion (131) and guiding transfer of the electrode raw material (50) from the raw material supply part (110) to the stirring part (130).

10. The electrode raw material transfer system (100) according to claim 9, wherein the piping part (170) comprises:
a first pipe (175) connected to the stirring part (130);
a second pipe (171) connected to the raw material supply part (110); and
a vibration reduction tube (173) provided in the second pipe (171).

11. The electrode raw material transfer system (100) according to claim 10, further comprising
an air knocker (180) mounted on the second pipe (171) and provided to hit the second pipe (171) upon an input mode of the electrode raw material (50).

12. The electrode raw material transfer system (100) according to claim 11, wherein
the control part (190) is provided to operate the air injection part (140) and the vibration part (150) continuously, and to operate the air knocker (180) at predetermined time intervals, upon the input mode.

13. The electrode raw material transfer system (100) according to claim 10, wherein
the vibration reduction tube (173) is formed of a silicone material.

14. The electrode raw material transfer system (100) according to claim 6, further comprising
a vent pipe (210) connected to the stirring part (130), wherein
the control part (190) is provided to open the vent pipe (210) to the outside upon the input mode.

15. The electrode raw material transfer system (100) according to claim 14, wherein
the control part (190) operates the air injection part (140) so that the air is sprayed at a second operating pressure greater than the first operating pressure when the pressure within the stirring part (130) decreases upon the input mode.

## Patentansprüche

1. Transfersystem für Elektrodenrohmaterialien (100), umfassend:
- einen Rührteil (130), der einen Einlassabschnitt (131) aufweist, in den Elektrodenrohmaterialien (50) eingeführt werden, und der zum Durchführen eines Mischprozesses für die Elektrodenrohmaterialien (50) vorgesehen ist;
- einen Sensorteil (135), der zum Messen eines Drucks innerhalb des Rührteils (130) vorgesehen ist;
**gekennzeichnet durch**
- einen Lufteinspritzteil (140), der am Einlassabschnitt (131) des Rührteils (130) vorgesehen ist und zum Sprühen von Luft in den Einlassabschnitt (131) vorgesehen ist;
- einen Vibrationsteil (150), der zum Anlegen von Vibrationen am Einlassabschnitt (131) vorgesehen ist; und
- einen Steuerteil (190), der zum Einstellen eines Lufteinspritzdrucks des Lufteinspritzteils (140) auf der Grundlage des Drucks innerhalb des Rührteils (130) vorgesehen ist.

2. Transfersystem für Elektrodenrohmaterialien (100) nach Anspruch 1, wobei:
- der Lufteinspritzteil (140) umfasst: eine Vielzahl von Luftdüsen (141 bis 144), die innerhalb des Einlassabschnitts (131) angeordnet sind, um Luft entlang der Eingaberichtung (F1) des Elektrodenrohmaterials (50) zu sprühen;
- einen pneumatischen Versorgungsteil (149), der jeder Luftdüse (141 bis 144) pneumatischen Druck bereitstellt; und
- einen Regler (145) zum Steuern des jeder Luftdüse (141 bis 144) zugeführten pneumatischen Drucks.

3. Transfersystem für Elektrodenrohmaterialien (100) nach Anspruch 2, wobei:
- die Vielzahl von Luftdüsen (141 bis 144) voneinander beabstandet entlang der Umfangsrichtung des Einlassabschnitts (131) angeordnet ist.

4. Transfersystem für Elektrodenrohmaterialien (100) nach Anspruch 1, wobei:
- der Vibrationsteil (150) einen Luftturbinenvibrator umfasst.

5. Transfersystem für Elektrodenrohmaterialien (100) nach Anspruch 1, wobei:
- der Steuerteil (190) vorgesehen ist, um den Lufteinspritzteil (140) und den Vibrationsteil (150) in einem Eingabemodus zu betreiben, in dem das Elektrodenrohmaterial (50) in den Rührteil (130) eingeführt wird.

6. Transfersystem für Elektrodenrohmaterialien (100) nach Anspruch 5, wobei:
- der Steuerteil (190) den Lufteinspritzteil (140) so betreibt, dass die Luft bei einem ersten Betriebsdruck, der niedriger ist als der Innendruck des Rührteils (130), im Eingabemodus versprüht wird.

7. Transfersystem für Elektrodenrohmaterialien (100) nach Anspruch 6, wobei:
- im Eingabemodus der erste Betriebsdruck 0,1 MPa bis 0,6 MPa beträgt.

8. Transfersystem für Elektrodenrohmaterialien (100) nach Anspruch 5, wobei:
- der Steuerteil (190) den Betrieb des Vibrationsteils (150) so steuert, dass die Vibration mit einer Intensität von 1 kgf bis 60 kgf im Eingabemodus angelegt wird.

9. Transfersystem für Elektrodenrohmaterialien (100) nach Anspruch 1, ferner umfassend:
- einen Rohmaterialversorgungsteil (110) mit einem Auslassabschnitt (111) zum Zuführen des Elektrodenrohmaterials (50) zum Rührteil (130); und
- einen Rohrleitungsteil (170), der den Auslassabschnitt (111) und den Einlassabschnitt (131) verbindet und den Transfer des Elektrodenrohmaterials (50) vom Rohmaterialversorgungsteil (110) zum Rührteil (130) führt.

10. Transfersystem für Elektrodenrohmaterialien (100) nach Anspruch 9, wobei der Rohrleitungsteil (170) umfasst:
- ein erstes Rohr (175), das mit dem Rührteil (130) verbunden ist;
- ein zweites Rohr (171), das mit dem Rohmaterialversorgungsteil (110) verbunden ist; und
- ein Schwingungsreduzierungsrohr (173), das im zweiten Rohr (171) vorgesehen ist.

11. Transfersystem für Elektrodenrohmaterialien (100) nach Anspruch 10, ferner umfassend
- einen Luftklopfer (180), der am zweiten Rohr (171) montiert ist und vorgesehen ist, um auf das zweite Rohr (171) in einem Eingabemodus des Elektrodenrohmaterials (50) zu schlagen.

12. Transfersystem für Elektrodenrohmaterialien (100) nach Anspruch 11, wobei:
- der Steuerteil (190) vorgesehen ist, um den Lufteinspritzteil (140) und den Vibrationsteil (150) kontinuierlich zu betreiben und um den Luftklopfer (180) in vorbestimmten Zeitintervallen im Eingabemodus zu betreiben.

13. Transfersystem für Elektrodenrohmaterialien (100) nach Anspruch 10, wobei:
- das Schwingungsreduzierungsrohr (173) aus einem Silikonmaterial gebildet ist.

14. Transfersystem für Elektrodenrohmaterialien (100) nach Anspruch 6, ferner umfassend:
- ein Entlüftungsrohr (210), das mit dem Rührteil (130) verbunden ist, wobei:
- der Steuerteil (190) vorgesehen ist, um das Entlüftungsrohr (210) im Eingabemodus nach außen zu öffnen.

15. Transfersystem für Elektrodenrohmaterialien (100) nach Anspruch 14, wobei:
- der Steuerteil (190) den Lufteinspritzteil (140) so betreibt, dass die Luft mit einem zweiten Betriebsdruck versprüht wird, der größer als der erste Betriebsdruck ist, wenn der Druck innerhalb des Rührteils (130) im Eingabemodus abnimmt.

## Revendications

1. Système de transfert de matières premières d'électrode (100) comprenant :
- une partie d'agitation (130) ayant une portion d'entrée (131) dans laquelle des matières premières d'électrode (50) sont introduites, et prévue pour réaliser un processus de mélange pour les matières premières d'électrode (50) ;
- une partie de capteur (135) prévue pour mesurer une pression à l'intérieur de la partie d'agitation (130) ;
**caractérisé par**
- une partie d'injection d'air (140) prévue au niveau de la portion d'entrée (131) de la partie d'agitation (130) et prévue pour pulvériser de l'air dans la portion d'entrée (131) ;
- une partie de vibration (150) prévue pour appliquer une vibration à la portion d'entrée (131) ; et
- une partie de commande (190) prévue pour ajuster une pression d'injection d'air de la partie d'injection d'air (140), sur la base de la pression à l'intérieur de la partie d'agitation (130).

2. Le système de transfert de matières premières d'électrode (100) selon la revendication 1, dans lequel :
- la partie d'injection d'air (140) comprend : une pluralité de buses d'air (141 à 144) disposées à l'intérieur de la portion d'entrée (131) pour pulvériser de l'air le long de la direction d'entrée (F1) de la matière première d'électrode (50) ;
- une partie d'alimentation pneumatique (149) fournissant une pression pneumatique à chaque buse d'air (141 à 144) ; et
- un régulateur (145) pour commander la pression pneumatique fournie à chaque buse d'air (141 à 144).

3. Le système de transfert de matières premières d'électrode (100) selon la revendication 2, dans lequel :
- la pluralité de buses d'air (141 à 144) est agencée à distance les unes des autres le long de la direction circonférentielle de la portion d'entrée (131).

4. Le système de transfert de matières premières d'électrode (100) selon la revendication 1, dans lequel :
- la partie de vibration (150) comprend un vibrateur à turbine à air.

5. Le système de transfert de matières premières d'électrode (100) selon la revendication 1, dans lequel :
- la partie de commande (190) est prévue pour faire fonctionner la partie d'injection d'air (140) et la partie de vibration (150) lors d'un mode d'entrée dans lequel la matière première d'électrode (50) est introduite dans la partie d'agitation (130).

6. Le système de transfert de matières premières d'électrode (100) selon la revendication 5, dans lequel :
- la partie de commande (190) fait fonctionner la partie d'injection d'air (140) de sorte que l'air est pulvérisé à une première pression de fonctionnement inférieure à la pression interne de la partie d'agitation (130) lors du mode d'entrée.

7. Le système de transfert de matières premières d'électrode (100) selon la revendication 6, dans lequel :
- lors du mode d'entrée, la première pression de fonctionnement est de 0,1 MPa à 0,6 MPa.

8. Le système de transfert de matières premières d'électrode (100) selon la revendication 5, dans lequel :
- la partie de commande (190) commande le fonctionnement de la partie de vibration (150) de sorte que la vibration est appliquée à une intensité de 1 kgf à 60 kgf lors du mode d'entrée.

9. Le système de transfert de matières premières d'électrode (100) selon la revendication 1, comprenant en outre :
- une partie d'alimentation en matière première (110) ayant une portion de sortie (111) pour fournir la matière première d'électrode (50) à la partie d'agitation (130) ; et
- une partie de tuyauterie (170) reliant la portion de sortie (111) et la portion d'entrée (131) et guidant le transfert de la matière première d'électrode (50) depuis la partie d'alimentation en matière première (110) vers la partie d'agitation (130).

10. Le système de transfert de matières premières d'électrode (100) selon la revendication 9, dans lequel la partie de tuyauterie (170) comprend :
- un premier tuyau (175) relié à la partie d'agitation (130) ;
- un second tuyau (171) relié à la partie d'alimentation en matière première (110) ; et
- un tube de réduction des vibrations (173) prévu dans le second tuyau (171).

11. Le système de transfert de matières premières d'électrode (100) selon la revendication 10, comprenant en outre :
- un heurtoir pneumatique (180) monté sur le second tuyau (171) et prévu pour frapper le second tuyau (171) lors d'un mode d'entrée de la matière première d'électrode (50).

12. Le système de transfert de matières premières d'électrode (100) selon la revendication 11, dans lequel :
- la partie de commande (190) est prévue pour faire fonctionner la partie d'injection d'air (140) et la partie de vibration (150) en continu, et pour faire fonctionner le heurtoir pneumatique (180) à des intervalles de temps prédéterminés, lors du mode d'entrée.

13. Le système de transfert de matières premières d'électrode (100) selon la revendication 10, dans lequel :
- le tube de réduction des vibrations (173) est formé d'un matériau en silicone.

14. Le système de transfert de matières premières d'électrode (100) selon la revendication 6, comprenant en outre :
- un tuyau de ventilation (210) relié à la partie d'agitation (130), dans lequel
- la partie de commande (190) est prévue pour ouvrir le tuyau de ventilation (210) vers l'extérieur lors du mode d'entrée.

15. Le système de transfert de matières premières d'électrode (100) selon la revendication 14, dans lequel :
- la partie de commande (190) fait fonctionner la partie d'injection d'air (140) de sorte que l'air est pulvérisé à une seconde pression de fonctionnement supérieure à la première pression de fonctionnement lorsque la pression à l'intérieur de la partie d'agitation (130) diminue lors du mode d'entrée.
